# EUROPEAN PATENT SPECIFICATION

(11) **EP 1 435 383 B1**
(45) Date of publication and mention of the grant of the patent: **05.03.2014**
(21) Application number: 03257905.4
(22) Date of filing: 16.12.2003
(51) Int. Cl.: C08J 9/32, C09J 5/00

(54) **Methods of using michael addition compositions**
Verfahren zur Verwendung von Zusammensetzungen auf Basis eines Michael-Additionsproduktes
Procédés pour l'utilisation de compositions à base d'un produit d'addition de Michael

(30) Priority: 02.01.2003 US 437614 P; 04.09.2003 US 655267
(43) Date of publication of application: 07.07.2004
(73) Proprietor: ROHM AND HAAS COMPANY, Philadelphia, Pennsylvania 19106-2399 (US)
(72) Inventor: Beckley, Ronald Scott, Gilbertsville Pennsylvania 19525 (US); Kauffman, Thomas Frederick, Harleysville Pennsylvania 19438 (US); Zajaczkowski, Michael John, York Pennsylvania 17404 (US); Chen, Mai, Hoffman Estates Illinois 60195 (US); Zupancic, Joseph James, Glen Ellyn Illinois 60137 (US)
(74) Representative: Buckley, Guy Julian

(56) References cited:
- EP-A- 1 283 235
- EP-A1- 1 462 501
- WO-A-91/09910
- WO-A1-96/37563
- US-A- 4 408 018

## Description

This invention pertains to a method of using a functional mixture for bonding substrates, for forming foams, and for forming elastomers.

Many compositions that are useful as foams, adhesives, sealants, and/or elastomers are cured. That is, they have undergone useful chemical reactions that increase molecular weight. Curing reactions consist of one or more of the following functions: polymerization, branching of polymers, crosslinking of polymers, and formation of crosslinked networks. One chemical reaction potentially useful as a curing reaction is Michael addition. For example, US Patent 5,084,536 discloses the use of Michael addition in the formation of a cured lacquer, which is a type of coating. However, it is desired to find adhesives, foams, and elastomers, the cure reactions of which include Michael addition.
WO91/09910 discloses compositions obtained by curing an acetoacetylated polymer poly(meth)acrylic or polyester-based resin and an NCO-free urethane polymer having vinylic end groups. EP-A-1283235 discloses an adhesive composition. WO96/37563 discloses a coating composition having improved adhesion to a substrate.

The problem addressed by the present invention is the provision of a method for bonding substrates, for forming foams, and for forming elastomers, using compositions that can be cured by the Michael addition reaction.

### STATEMENT OF THE INVENTION

The present invention, in its various aspects is as set out in the accompanying claims

In one aspect there is provided a method for bonding two substrates comprising the steps of
(a) applying to a first substrate a layer of a functional mixture comprising
   (i) at least one multi-functional Michael donor that has a skeleton selected from the group consisting of cyclohexane dimethanol, hexane diol, castor oil, trimethylol propane, glycerol, ethylene glycol, propylene glycol, pentaerythritol, neopentyl glycol, diethylene glycol, dipropylene glycol, butanediol, 2-methyl-1,3-propanediol, trimethylolethane, 4,8-Bis(hydroxymethyl)tricyclo[5.2.1.0^{2,6}]decane, Polysorbate 80, glucose, and dipentaerythritol,
   (ii) at least one multi-functional Michael acceptor, wherein said multi-functional Michael acceptor has two or more functional groups having the structure R¹R²C=CR³-C(O) -, wherein R¹, R², and R³ are, independently, hydrogen or organic radicals, and
   (iii) at least one compound that will catalyze a Michael addition reaction;
(b) contacting a further substrate to said layer of said mixture,
wherein said two substrates form a pair selected from the group of pairs consisting of polypropylene/polypropylene, polyester/nylon, polyester/polyethylene, polypropylene/metallized polypropylene, polypropylene/aluminum foil, polyester/aluminum foil, polyamide/aluminum foil.

### DETAILED DESCRIPTION OF THE INVENTION

As used herein, "(meth)acrylate" means acrylate or methacrylate, and "(meth)acrylic" means acrylic or methacrylic.

The present invention involves the use of compounds with functional groups capable of undergoing a Michael addition reaction. Michael addition is taught, for example, by RT Morrison and RN Boyd in Organic Chemistry, third edition, Allyn and Bacon, 1973. The reaction is believed to take place between a Michael donor and a Michael acceptor, in the presence of a strong base catalyst.

A "Michael donor," as used herein, is a compound with at least one Michael donor functional group, which is a functional group containing at least one Michael active hydrogen atom, which is a hydrogen atom attached to a carbon atom that is located between two electron-withdrawing groups such as C=O and/or C=N. Examples of Michael donor functional groups are malonate esters, acetoacetate esters, malonamides, and acetoacetamides (in which the Michael active hydrogens are attached to the carbon atom between two carbonyl groups); and cyanoacetate esters and cyanoacetamides (in which the Michael active hydrogens are attached to the carbon atom between the carbonyl group and the cyano group). A compound with two or more Michael active hydrogen atoms is known herein as a multi-functional Michael donor. A Michael donor may have one, two, three, or more separate functional groups that each contain one or more Michael active hydrogen atoms. The total number of Michael active hydrogen atoms on the molecule is the functionality of the Michael donor. As used herein, the "skeleton" of the Michael donor is the portion of the donor molecule other than the functional group containing the Michael active hydrogen atom(s).

A "Michael acceptor," as used herein, is a compound with at least one functional group with the structure (I) R¹R²C=CR³-C(O) -, where R¹, R², and R³ are, independently, hydrogen or organic radicals such as for example, alkyl (linear, branched, or cyclic), aryl, alkaryl, including derivatives and substituted versions thereof. R, R², and R³ may or may not, independently, contain ether linkages, carboxyl groups, further carbonyl groups, thio analogs thereof, nitrogen containing groups, or combinations thereof. A compound with two or more functional groups, each containing structure (I), is known herein as a multi-functional Michael acceptor. The number of functional groups containing structure (I) on the molecule is the functionality of the Michael acceptor. As used herein, the "skeleton" of the Michael acceptor is the portion of the donor molecule other than structure (I). Any structure (I) may be attached to another (I) group or to the skeleton directly.

In the practice of the present invention, the skeleton of the multi-functional Michael donor is selected from the group consisting of cyclohexane dimethanol, hexane diol, castor oil, trimethylol propane, glycerol, ethylene glycol, propylene glycol, pentaerythritol, neopentyl glycol, diethylene glycol, dipropylene glycol, butanediol, 2-methyl-1,3-propanediol, trimethylolethane, 4,8-Bis(hydroxymethyl)tricyclo[5.2.1.0^{2,6}]decane, Polysorbate 80, glucose, and dipentaerythritol,

In the practice of the present invention, the skeleton of the multi-functional Michael acceptor may be the same or different from the skeleton of the multi-functional Michael donor. In some embodiments, one or more polyhydric alcohol is used as at least one skeleton. Some polyhydric alcohols suitable as skeletons for the multi-functional Michael acceptor include, for example, alkane diols, alkylene glycols, glycerols, sugars, pentaerythritols, polyhydric derivatives thereof, or mixtures thereof. Some polyhydric alcohols suitable as skeletons include, for example, cyclohexane dimethanol, hexane diol, castor oil, trimethylol propane, glycerol, ethylene glycol, propylene glycol, pentaerythritol, neopentyl glycol, diethylene glycol, dipropylene glycol, butanediol, 2-methyl-1,3-propanediol, trimethylolethane, similar polyhydric alcohols, substituted versions thereof, and mixtures thereof.

Further examples of polyhydric alcohols suitable as skeletons in multi-functional Michael acceptor include, for example, polyhydric alcohols with molecular weight of 150 or greater (in addition to those named herein above). One suitable polyhydric alcohol with molecular weight of 150 or greater is 4,8-Bis(hydroxymethyl)tricyclo[5.2.1.0^{2,6}]decane, Chemical Abstracts Service (CAS) registry number 26896-48-0; any isomers or mixtures thereof are suitable. Another suitable polyhydric alcohol with molecular weight of 150 or greater is Polysorbate 80, CAS registry number 9005-65-6. Further examples of polyhydric alcohols with molecular weight of 150 or greater suitable as skeletons include, for example, polyethylene glycol, polypropylene glycol, glucose, and dipentaerythritol. Additionally, a wide variety of fatty acids and related oils are either polyhydric alcohols or may be hydroxylated by a variety of methods to form polyhydric alcohols; such polyhydric alcohols are also suitable. Some examples of fatty acids and related oils suitable as skeletons in the present invention are castor oil, hydroxylated fats and oils, hydroxylated derivatives of fats and oils, and mixtures thereof. Polyhydric alcohols similar to those named above are also suitable as skeletons. Also, mixtures of suitable polyhydric alcohols are suitable.

In some embodiments, the skeleton of the multi-functional Michael acceptor is an oligomer or a polymer. A polymer, as used herein and as defined by FW Billmeyer, JR. in Textbook of Polymer Science, second edition, 1971 ("Billmeyer") is a relatively large molecule made up of the reaction products of smaller chemical repeat units. Normally, polymers have 11 or more repeat units. Polymers may have structures that are linear, branched, star shaped, looped, hyperbranched, or crosslinked; polymers may have a single type of repeat unit ("homopolymers") or they may have more than one type of repeat unit ("copolymers"). As used herein, "resin" is synonymous with polymer.

Polymers have relatively high molecular weights. Polymer molecular weights can be measured by standard methods such as, for example, size exclusion chromatography or intrinsic viscosity. Generally, polymers have weight-average molecular weight (Mw) of 1,000 or more. Polymers may have extremely high Mw; some polymers have Mw above 1,000,000; typical polymers have Mw of 1,000,000 or less.

"Oligomers," as used herein, are structures similar to polymers except that oligomers have fewer repeat units and lower molecular weight. Normally, oligomers have 2 to 10 repeat units. Generally, oligomers have Mw of 400 to 1,000.

In some embodiments, oligomers and/or polymers may be used as one or more skeleton. One reason for using oligomers and/or polymers as one or more skeleton is to provide the functional mixture with the desired viscosity. Also, in embodiments in which the functional mixture will be used as an adhesive, oligomers and/or polymers are believed to improve the green strength of the adhesive (that is, the adhesive strength obtained before the cure reactions are complete).

The practice of the present invention involves formation of a functional mixture that includes at least one multi-functional Michael donor, at least one multi-functional Michael acceptor, and at least one strong base catalyst. In some embodiments, the functional mixture of the present invention may also contain one or more adjuvants chosen to improve the properties, such as, for example, solvents, tackifiers, emulsifiers, polymers, plasticizers, blowing agents, expandable microspheres, thickeners, or reactive compounds that are neither multi-functional Michael donors nor multi-functional Michael acceptors. Adjuvants are preferably chosen to be compatible with the functional mixture and used in a way that does not interfere with the practice of the invention (for example, adjuvants will preferably be chosen that do not interfere with the mixing of the ingredients, the cure of mixture, the application to substrate, or the final properties of the cured mixture).

In choosing a specific multi-functional Michael donor and a specific multi-functional Michael acceptor to include in the functional mixture, it is desirable to consider the functionalities. It is generally believed that reacting a Michael donor with functionality of 2 with a Michael acceptor with a functionality of 2 will lead to linear molecular structures. Often, it is desirable to create molecular structures that are branched and/or crosslinked, which is believed to require the use of at least one ingredient with functionality of 3 or greater. Therefore, it is preferred to have at least one Michael donor or at least one Michael acceptor or both have functionality of 3 or greater. In some embodiments, the average functionality of all the Michael donors and all the Michael acceptors in the functional mixture taken together is greater than 2; in some embodiments, that average functionality is 2.5 or greater; or 3 or greater; or 4 or greater.

In some embodiments of the present invention, at least one multi-functional Michael donor has a Michael donor functional group that has two Michael active hydrogen atoms attached to the same carbon atom (herein called "Michael twin" hydrogen atoms). In some embodiments (herein called "sequential" embodiments) with Michael twin hydrogen atoms, after the first Michael twin hydrogen atom has been abstracted, the cure will normally proceed by first abstracting a hydrogen atom from a different Michael donor functional group instead of abstracting the second Michael twin hydrogen atom. In sequential embodiments, after most or all of functional groups with Michael twin hydrogen atoms have had one of the Michael twin hydrogen atoms abstracted, if further Michael addition reactions take place, the second Michael twin hydrogen atom may be abstracted from such functional groups. In some sequential embodiments, the cure will stop when few or none of the second Michael twin hydrogen atoms are abstracted from Michael donor functional groups from which one Michael twin hydrogen atom has already been abstracted. In other embodiments (herein called "non-sequential" embodiments) with Michael twin hydrogen atoms, both Michael twin hydrogen atoms may be abstracted from a single Michael donor functional group before most or all of the functional groups with Michael twin hydrogen atoms have had one hydrogen atom abstracted. In the practice of the present invention, embodiments are also contemplated that are any combination of sequential and non-sequential embodiments.

In the mixtures of the present invention, the relative proportion of multi-functional Michael acceptors to multi-functional Michael donors can be characterized by the reactive equivalent ratio, which is the ratio of the number of all the functional groups (I) in the mixture to the number of Michael active hydrogen atoms in the mixture. In some embodiments, the reactive equivalent ratio is 0.1:1 or higher; preferred is 0.2:1 or higher; more preferred is 0.3:1 or higher; still more preferred is 0.4:1 or higher; most preferred is 0.45:1 or higher. In some embodiments, the reactive equivalent ratio is 3:1 or lower; preferred is 1.75:1 or lower; more preferred is 1.5:1 or lower; most preferred is 1.25:1 or lower.

In some embodiments with relatively high reactive equivalent ratio, the cured functional mixture is believed to be likely to contain unreacted functional groups (I); if the reactive equivalent ratio is high enough, it is believed to be likely that the cured functional mixture will contain entire multifunctional Michael acceptor molecules (herein called "unreacted multifunctional Michael acceptor molecules") in which none of the functional groups (I) have reacted. For example, if the multifunctional Michael acceptor molecules all have two functional groups (I) each, then a functional mixture with reactive equivalent ratio of 2:1 or higher is believed to be likely to yield a cured functional mixture in which there are some unreacted multifunctional Michael acceptor molecules. In some embodiments, the presence of unreacted multifunctional Michael acceptor molecules will be desirable (for example, if it is intended to conduct chemical reactions in addition to Michael addition). In other embodiments, it will be desirable to have few or no unreacted multifunctional Michael donor molecules; in such embodiments, it is contemplated that the practitioner will readily be able to choose a reactive equivalent ratio that will be low enough to make it likely that the cured functional mixture will have few or no unreacted multifunctional Michael donor molecules.

It is preferable in the practice of the present invention to choose multi-functional Michael donors, multi-functional Michael acceptors, strong base catalysts, and any other ingredients so that the mixture thereof is homogeneous (i.e., the mixture will not phase separate upon standing or curing).

In some embodiments of the present invention, the ingredients of the functional mixture are dissolved in a solvent or otherwise carried in a fluid medium (for example, as an emulsion or dispersion). In other embodiments, the functional mixture of the present invention is substantially free of solvent. By "substantially free of solvent", herein is meant that the composition contains at least 70% solids, preferably at least 95% solids, by weight based on the total weight of the functional mixture. By "solids" is meant herein the weight all Michael donors, all Michael acceptors, all polymers, all materials that are solid when pure at 25°C, and all materials with boiling point above 200°C.

The practice of the present invention involves the use of at least one multi-functional Michael acceptor. In some embodiments, the skeleton of the multi-functional Michael acceptor is the residue of a polyhydric alcohol, such as, for example, those listed herein above. In some embodiments, the skeleton of the multi-functional Michael acceptor may be a polymer, such as for example, a poly alkylene oxide, a polyurethane, a polyethylene vinyl acetate, a polyvinyl alcohol, a polydiene, a hydrogenated polydiene, an alkyd, an alkyd polyester, a (meth)acrylic polymer, a polyolefin, a halogenated polyolefin, a polyester, a halogenated polyester, a copolymer thereof, or a mixture thereof. In some embodiments, the skeleton of the multi-functional Michael acceptor may be an oligomer.

Some suitable multi-functional Michael acceptors in the present invention include, for example, molecules in which some or all of the structures (I) are residues of (meth)acrylic acid, (meth)acrylamide, fumaric acid, or maleic acid, substituted versions thereof, or combinations thereof, attached to the multi-functional Michael acceptor molecule through an ester linkage. A compound with structures (1) that include two or more residues of (meth)acrylic acid attached to the compound with an ester linkage is called herein a "poly-functional (meth)acrylate." Poly-functional (meth)acrylates with at least two double bonds capable of acting as the acceptor in Michael addition are suitable multi-functional Michael acceptors in the present invention. Preferred poly-functional (meth)acrylates are poly-functional acrylates (compounds with two or more residues of acrylic acid, attached with an ester linkage).

Examples of suitable multi-functional Michael acceptors that are poly-functional acrylates include 1,4-butanediol diacrylate, 1,6-hexanediol diacrylate, neopentyl glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, cyclohexane dimethanol diacrylate, alkoxylated hexanediol diacrylate, alkoxylated cyclohexane dimethanol diacrylate, propoxylated neopentyl glycol diacrylate, trimethylolpropane triacrylate, ethoxylated trimethylolpropane triacrylate, propoxylated trimethylolpropane triacrylate, acrylated polyester oligomer, bisphenol A diacrylate, ethoxylated bisphenol A diacrylate, tris(2-hydroxyethyl) isocyanurate triacrylate, acrylated aliphatic urethane oligomer, acrylated aromatic urethane oligomer, and the like, and mixtures thereof.

Also suitable as the multi-functional Michael acceptor are poly-functional (meth)acrylates in which the skeleton is polymeric. The (meth)acrylate groups may be attached to the polymeric skeleton in any of a wide variety of ways. For example, a (meth)acrylate ester monomer may be attached to a polymerizable functional group through the ester linkage, and that polymerizable functional group may be polymerized with other monomers in a way that leaves the double bond of the (meth)acrylate group intact. For another example, a polymer may be made with functional groups (such as, for example, a polyester with residual hydroxyls), which may be reacted with a (meth)acrylate ester (for example, by transesterification), to yield a polymer with pendant (meth)acrylate groups. For yet another example, a homopolymer or copolymer may be made that includes a poly-functional acrylate monomer (such as trimethylol propane triacrylate) in such a way that not all the acrylate groups react. In embodiments in which the skeleton of the multi-functional Michael acceptor is a polymer, the functional groups (I) may be pendent from the polymer chain, or they may be incorporated into the polymer chain, or a combination thereof.

Also among suitable multi-functional Michael acceptors are compounds with two or more functional groups each containing structure (I) in which one or more of the functional groups containing structure (I) is the residue of (meth)acrylamide. That is, one or more of the functional groups containing structure (I) is 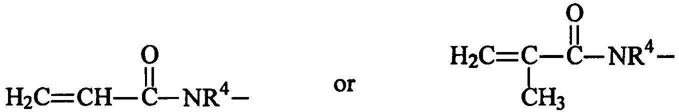 where R4 is defined in the same way as R1, R2, and R3, defined herein above; all of R1, R2, R3, and R4 may be chosen independently of each other. In some suitable multi-functional Michael acceptors, all the functional groups containing structure (I) are residues of (meth)acrylamide (including, for example, methylenebisacrylamide). In other suitable multi-functional Michael acceptors, at least one functional group containing structure (I) is a residue of (meth)acrylamide, and at least one functional group containing structure (I) is a functional group other than a residue of (meth)acrylamide.

Mixtures of suitable multi-functional Michael acceptors are also suitable. The practice of the present invention involves the use of a multi-functional Michael donor. In some embodiments of the present invention, the skeleton of the multi-functional Michael donor is the residue of a polyhydric alcohol, such as, for example, those listed herein above.

In suitable multi-functional Michael donors, the functional groups with Michael active hydrogens may be attached to the skeletons in any of a wide variety of arrangements. In some embodiments, the multi-functional Michael donor has the structure 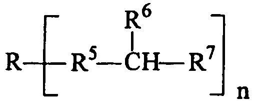 where n is at least 2; R⁵ is - 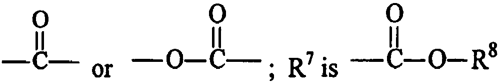 or 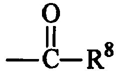 or -C≡N; R⁶ and R⁸ are, independently, H, alkyl (linear, cyclic, or ;

R6 and R8 are, independently, H, alkyl (linear, cyclic, or branched), aryl, alkaryl, or substituted versions thereof; and R is a residue of any of the polyhydric alcohols or polymers discussed herein above as suitable as the skeleton of a multi-functional Michael donor. In some embodiments, R6 will be the residue of a Michael acceptor. In some embodiments, R6 or R8 will be attached to further functional groups with Michael active hydrogens.

Some suitable multi-functional Michael donors include polyhydric alcohols in which one or more hydroxyl group is linked to an acetoacetate group through an ester linkage. Some suitable multi-functional Michael donors are, for example, 1,6-hexanediol diacetoacetate, neopentylglycol diacetoacetate, the diacetoacetate of 4,8-Bis(hydroxymethyl)tricyclo[5.2.1.02,6] decane, 2-methyl-1,3-propanediol diacetoacetate, diethylene glycol diacetoacetate, ethylene glycol diacetoacetate, propylene glycol diacetoacetate, dipropylene glycol diacetoacetate, cyclohexanedimethanol diacetoacetate, other diol diacetoacetates, trimethylol propane triacetoacetate, pentaerythritol triacetoacetate, glycerol trisacetoacetate, trimethylolethane triacetoacetate, other triol triacetoacetates, diacetoacetates of triols, and analogous malonate esters. Some further examples of suitable multi-functional Michael donors include tetra-, penta-, and higher acetoacetates of polyols (i.e., polyols on which four, five, or more hydroxyl groups are linked to acetoacetate groups through ester linkages), including, for example, pentaerythritol tetraacetoacetate.

Additional suitable multi-functional Michael donors include compounds with one or more of the following functional groups: acetoacetate, acetoacetamide, cyanoacetate, and cyanoacetamide; in which the functional groups may be attached to castor oil. A suitable multi-functional Michael donor is, for example, acetoacetate functional castor oil.

Mixtures of suitable multi-functional Michael donors are also suitable.

In some embodiments of the present invention, the structure (I) will be attached to a molecule that is separate from the molecule to which the Michael donor functional group is attached. Also contemplated are other embodiments (herein called "dual" embodiments), in which the structure (I) and the Michael donor functional group are attached to the same molecule; that is, a molecule could function as both the multi-functional Michael donor and the multi-functional Michael acceptor, if it has more than one structure (I) and also more than one Michael donor functional group. In one example of a dual embodiment, malonate molecules are incorporated into the backbone of a polyester polymer, and the ends of that polymer have acrylic functionality. In a second example of a dual embodiment, maleic acid and/or maleic anhydride is incorporated into the backbone of a polyester polymer, and the ends of that polymer have acetoacetate functionality.

The practice of the present invention involves the use of a strong base catalyst. A "strong base catalyst," as used herein, is a compound that will catalyze a Michael addition reaction. While the invention is not limited to any specific theory, it is believed that the strong base catalyst abstracts a hydrogen ion from the Michael donor. Some compounds that are known to function as strong base catalysts are, for example, certain amine compounds, ammonium compounds, acetylacetonate compounds, hydroxides, alkoxides, and compounds that have anions derived from acetoacetate groups. Among the suitable amine compounds are, for example, piperidine and amidine compounds. Amidine compounds contain the radical group 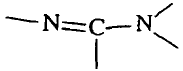 Some suitable amidine compounds include, for example, guanidine and cyclic amidine compounds such as, for example, 1,8-diazabicyclo[5.4.0] undec-7-ene (DBU) and 1,5-diazabicyclo[4.3.0]non-5-ene (DBE). Among the suitable ammonium compounds are, for example, quaternary ammonium hydroxides such as, for example, tetramethyl ammonium hydroxide, tetraethyl ammonium hydroxide, tetrabutyl ammonium hydroxide, and tetraoctyl ammonium hydroxide. Among the suitable acetylacetonate compounds are, for example, alkali acetylacetonates such as, for example, sodium acetylacetonate and potassium acetylacetonate. Also among the suitable compounds that have anions derived from acetoacetate groups are compounds made by starting with a Michael donor compound that contains at least one acetoacetate group and converting at least one of the at least one acetoacetate groups to the alkali metal enolate of the acetoacetate anion; that is, a Michael donor compound that contains the fragment 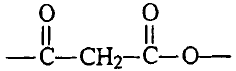 would be converted to the anion 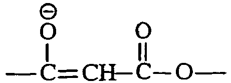 with an alkali metal cation also present in the composition.

In some embodiments of the present invention, at least one compound that is a strong base catalyst is added to one or more ingredients of the functional mixture. In other embodiments of the present invention, at least one strong base catalyst is generated in situ; that is, one or more strong-base-precursor compounds is added to one or more ingredients of the functional mixture, and then one or more of the strong-base-precursor compounds forms a strong base catalyst by any one of a wide variety of chemical reactions. In some embodiments, the reaction in which a strong-base-precursor compound forms a strong base catalyst begins when the strong-base-precursor compound is added to one or more ingredients of the functional mixture; in some embodiments, the reaction does not occur until a stimulus is applied, such as, for example, elevated temperature or exposure to radiation (such as, for example, ultraviolet radiation). Whether the reaction in which a strong-base-precursor compound forms a strong base catalyst requires an applied stimulus or not, the reaction may be unimolecular (for example, a rearrangement or a decomposition of a strong-base-precursor compound), or the reaction may occur between a first strong-base-precursor compound molecule and at least one additional molecule; the additional molecule(s) may be at least one other strong-base-precursor compound molecule (either identical to or different from the first strong-base-precursor compound molecule), or the additional molecule(s) may be at least one molecule of some other moiety or moieties in the functional mixture, or the additional molecule(s) may be some mixture thereof. Also contemplated are embodiments of the present invention in which at least one strong base catalyst is added to one or more ingredients of the functional mixture and at least one strong base catalyst is generated in situ.

Among the hydroxide compounds suitable as the strong base catalyst are, for example, sodium hydroxide and potassium hydroxide. Among the alkoxides suitable as the strong base catalyst are, for example, sodium alkoxides and potassium alkoxides such as, for example, sodium methoxide, sodium ethoxide, sodium proproxide, sodium butoxide, potassium methoxide, potassium ethoxide, potassium propoxide, and potassium butoxide.

Also suitable as strong base catalysts are compounds similar to those listed above. Also suitable are mixtures of suitable strong base catalysts. Preferred strong base catalysts are sodium alkoxides and potassium alkoxides; more preferred is sodium ethoxide.

In some embodiments of the present invention, the functional mixture does not contain any mono-functional Michael acceptors. In other embodiments, the functional mixture contains at least one mono-functional Michael acceptor, in addition to at least one multi-functional Michael donor, at least one multi-functional Michael acceptor, and at least one strong base catalyst. As used herein, a "mono-functional Michael acceptor" is a Michael acceptor (as defined herein above) that has exactly one structure (1) in each molecule. Some mono-functional Michael acceptors include, for example, (meth)acrylic acid and esters thereof that have one structure (1) per molecule, including, for example, alkyl (meth)acrylates (including, for example, C₁ to C₈ alkyl (meth) acrylates such as, for example, methyl methacrylate, ethyl acrylate, butyl acrylate, and isobornyl acrylate), substituted alkyl (meth)acrylates, and caprolactone (meth)acrylate.

The practice of the present invention involves the use of a functional mixture. It is contemplated that the ingredients of the functional mixture will be chosen so that Michael addition will take place under the conditions of practicing the invention. For example, a particular multi-functional Michael acceptor may undergo the Michael addition reaction with some multi-functional Michael donors less readily than with other multi-functional Michael donors. Further, some strong base catalysts promote the Michael addition reaction more strongly than others. Also, the Michael addition reaction proceeds more quickly at higher temperatures. For example, methacrylate groups usually react more readily with cyanoacetate groups than with acetoacetate groups. However, even if the reaction between a specific multi-functional Michael donor and a specific multi-functional Michael acceptor is slow or ineffective, in some cases it will be possible to speed the reaction or make it effective by employing a more active strong base catalyst, by conducting the reaction at elevated temperature, or both. Among embodiments in which the Michael addition reaction is conducted at elevated temperature, some suitable elevated temperatures are, for example, 43°C (110°F) or above; or 49°C (120°F) or above. Among embodiments in which the Michael addition reaction is conducted at elevated temperature, some suitable elevated temperatures are, for example, 93°C (200°F) or below; or 71°C (160°F) or below; or 60°C (140°F) or below. Among embodiments in which the Michael addition reaction is conducted at elevated temperature, some suitable durations of exposure of the reactive mixture to elevated temperature are, for example, 2 minutes or more; or 5 minutes or more; or 10 minutes or more. Among embodiments in which the Michael addition reaction is conducted at elevated temperature, some suitable durations of exposure of the reactive mixture to elevated temperature are, for example, 60 minutes or less; or 30 minutes or less; or 20 minutes or less. The practitioner of the invention will readily be able to choose an effective combination of ingredients and temperature to practice the present invention effectively.

Additionally, independently of the speed of the Michael addition reaction, some specific combinations of multifunctional Michael donor, multifunctional Michael acceptor, and strong base catalyst will lead to compositions that perform better for the intended purpose than compositions based on other combinations. The practitioner of the invention will readily be able to choose an effective combination of ingredients that will perform well for the intended purpose.

The functional mixture of the present invention, when it is freshly mixed, should have a useful viscosity. The correct value of viscosity will be determined by the means used to mix the ingredients and the means used to mold the functional mixture or apply it to a substrate. Viscosity is preferably measured at the temperature at which the functional mixture will be molded or applied to substrate. For embodiments involving use as an adhesive that is applied to substrate, preferred viscosity of the functional mixture is 0.1 Pa·s (100 cps) or greater; more preferred is 0.2 Pa·s (200 cps) or greater; most preferred is 0.4 Pa·s (400 cps) or greater; also for application to substrate, preferred viscosity is 10 Pa·s (10,000 cps) or less; more preferred is 6 Pa·s (6,000 cps); most preferred is 3 Pa·s (3,000 cps) or less. In embodiments involving use as elastomer and/or polymeric foam, the preferred viscosity is usually higher than the preferred viscosity for adhesives that are applied to substrate.

In the functional mixture of the present invention, it is preferable that at least one of the multi-functional Michael donors or at least one of the multi-functional Michael acceptors or at least one of each has a skeleton that has molecular weight of 150 or higher; more preferable is 400 or higher. Also preferable are functional mixtures in which at least one of the multi-functional Michael donors or at least one of the multi-functional Michael acceptors or at least one of each has a skeleton that is an oligomer or a polymer. In embodiments in which the functional mixture will be applied to a substrate and in which at least one skeleton is a polymer, preferred polymers have Mw of 25,000 or less; more preferred is 10,000 or less; and most preferred is 5,000 or less.

The functional mixture preferably has a useful pot life. One convenient method of measuring the pot life is to measure the time from the formation of the functional mixture until the viscosity of the mixture rises until it is so high that the functional mixture can no longer be molded or applied to a substrate. For any specific embodiment, the viscosity of the freshly-mixed functional mixture may be measured by any standard method; viscosity measurement should be made at the temperature at which the functional mixture will be applied to a substrate or placed into a mold. One useful measure of the pot life is the time required for the viscosity, at that temperature, to rise by a factor of 5X. For embodiments involving use as an adhesive, preferred pot life of the functional mixture is 5 minutes or more; more preferred is 10 minutes or more; even more preferred is 25 minutes or more. Also preferred is pot life of 8 hours or less; more preferred is 4 hours or less; even more preferred is 2 hours or less; still more preferred is 1 hour or less; most preferred is 30 minutes or less. For example, some embodiments will have a useful pot life at 25°C; other embodiments will have a useful pot life at 50°C; still other embodiments will have a useful pot life at whatever temperature is useful for molding or for performing the application to substrate, using the method of application appropriate for those embodiments. It is contemplated that some embodiments involving use of the cured functional mixture as an elastomer or a polymeric foam will have preferred pot lives shorter than those preferred for embodiments involving use of the functional mixture as an adhesive.

Some embodiments of the present invention involve applying a layer of the functional mixture to a substrate. The layer may be a continuous or discontinuous film. The method of application may be by a number of ways known to those having ordinary skill in the art, such as, for example, brushing, spraying, roller coating, rotogravure coating, flexographic coating, flow coating, curtain coating, dipping, hot melt coating, extrusion, co-extrusion, similar methods, and combinations thereof.

In other embodiments, particularly those in which the cured functional mixture will be used as a foam or as an elastomer, the functional mixture may be formed by mixing the ingredients in a mold or other suitable container and kept therein during the cure reaction. Alternatively, after the ingredients are mixed, the functional mixture may be placed into a mold or other suitable container and kept therein during the cure reaction.

In some embodiments, the functional mixture may be dried. That is, it may be heated and/or subjected to reduced pressure to remove any volatile compounds such as, for example, solvents. Drying may be performed before, during, or after the cure reaction takes place. Independently, in embodiments involving applying the functional mixture to a substrate or placing it into a mold, drying may be performed before, during, or after the functional mixture is applied to substrate or placed into a mold.

In some embodiments of the present invention, the functional mixture is formed from a two part system, where one part contains one or more multi-functional Michael acceptors and the other part contains one or more multi-functional Michael donors. The catalyst may be present in either or both parts. In embodiments involving application of the functional mixture to a substrate, the functional mixture is then applied to the substrate. Alternatively, if the functional mixture is to be used as a foam or elastomer, the functional mixture may be formed by mixing the two parts in a mold or other suitable container; alternatively, after the two parts are mixed, the functional mixture may be placed into a mold or other suitable container.

In some embodiments that involve applying a layer of the functional mixture to a substrate, one or more substrates may be treated prior to contact with the functional mixture, using one or more of treatments such as, for example, corona discharge or coating with chemical primer. In other embodiments, the substrate is contacted with the functional mixture of the present invention without prior treatment. The functional mixture may be applied at a level of 0.2 to 5.8 g/m² (0.12 to 3.56 lb/ream).

In embodiments in which the functional mixture will be used to bond substrates to each other, after a layer of the functional mixture has been applied to a first substrate, the layer may then be contacted with another substrate to form a composite. The composite so formed is optionally subjected to applied pressure, such as passing it between rollers to effect increased contact of the substrates with the composition; such pressure is often applied before the cure reaction is substantially complete. In another embodiment of the invention, layers of the functional mixture may be simultaneously or sequentially applied to both surfaces of a first substrate, which layers are then simultaneously or sequentially contacted with two further substrates, which may be the same, or different. It is further contemplated that the composite construction may sequentially be bonded to other substrate(s) using the functional mixture of the invention, or a different composition before or after the process described herein. The first and second substrates to be bonded in the method of this invention may be the same or different and include, for example plastics, metallized plastics, metal, and paper, which may have smooth or structured surfaces.

Among embodiments in which the functional mixture will be used to bond substrates to each other, in some of these embodiments, most or all of the Michael addition reaction is completed before the functional mixture is in contact with any substrate or while the functional mixture is in contact with only one substrate.

In other embodiments in which the functional mixture will be used to bond substrates to each other, a substantial part the Michael addition reaction takes place when the functional mixture is in contact with at least two substrates. In some of such embodiments, at least 25 mole% of the Michael addition reactions that take place occur when the functional mixture is in contact with at least two substrates; in other such embodiments, at least 50 mole%, or at least 75 mole%, or at least 90 mole% of the Michael addition reactions that take place occur when the functional mixture is in contact with at least two substrates.

In some embodiments of the present invention, the substrates are relatively thin and flat, and the resulting composites are called laminates. Some examples of substrates for laminates are polyethylene, polypropylene, polyesters such as polyethylene terephthalate, polyamides (nylon), metallized polypropylene, and aluminum foil, which may be provided in the form of rolls, sheets, films, foils *etc.* Further examples of substrates for laminates are woven or nonwoven fabrics, which may be constructed of fibers using one or more synthetic fibers made of materials such as, for example, rayon, nylon, polyester, or polyalkyleneselected from polypropylene and polyethylene.

An adhesive suitable for bonding substrates together to form a laminate is known herein as a "laminating adhesive."

In the practice of the present invention, pairs of substrates that may be bonded by the composition of the present invention to form laminates are polypropylene/polypropylene, polyester/nylon, polyester/polyethylene, polypropylene/metallized polypropylene, polypropylene/aluminum foil, polyester/aluminum foil, or polyamide/aluminum foil. Also contemplated are multiply laminate structures using, for example, various combinations of the above named substrates, where at least one adhesive layer includes a functional mixture of the present invention.

In some embodiments of the present invention, some or all of the functional mixture undergoes one or more chemical reactions. In some embodiments, the chemical reaction will be Michael addition, in some embodiments the chemical reaction will be one or more other (i.e., other than Michael addition) reactions, and in some embodiments the chemical reaction will be both Michael addition and one or more other chemical reactions. The compound or compounds resulting from the chemical reaction(s) are known herein synonymously as the "product" of the chemical reaction(s) and as the "cured functional mixture."

The cured functional mixture may be characterized by measuring its glass transition temperature (Tg). The glass transition temperature may be measured by Dynamic Mechanical Analysis (DMA) in flexural mode at 1 hertz (1 cycle/sec). The Tg is identified as the peak in the curve of tan delta versus temperature. The DMA test may be performed on the cured functional mixture by itself, or the DMA test may be performed while the cured functional mixture is in contact with other materials. For example, if the cured functional mixture is in a layer between substrates in a composite, the entire composite may be tested in the DMA test; persons skilled in the art will readily know how to ignore any peaks in the curve of tan delta versus temperature that are due to substrates or to materials other than the cured functional mixture. In some embodiments (herein called "multi-Tg" embodiments), the cured functional mixture will have more than one peak in the curve of tan delta versus temperature.

The statement that a cured functional mixture "has a Tg of " a certain value is to be understood herein to mean that the cured functional mixture either has a sole Tg of that certain value or that the cured functional mixture is a multi-Tg embodiment and that one of the peaks in the curve of tan delta versus temperature has a peak of that certain value.

The cured functional mixture of the present invention may have any of a wide range of Tg's. In some embodiments, the cured functional mixture will have a Tg of - 80°C or higher. Independently, in some embodiments, the cured functional mixture will have a Tg of 120°C or lower. The Tg or multiple Tg's will be chosen to give the best properties that are desired for the intended use of the cured functional mixture.

For example, when the cured functional mixture is intended for use as a structural adhesive, the functional mixture will usually be chosen so that the cured functional mixture will have a Tg of 50°C or higher. As another example, when the cured functional mixture is intended for use as a pressure-sensitive adhesive, the functional mixture will usually be chosen so that the cured functional mixture will have a Tg of 15°C or lower; or 0°C or lower; or -25°C or lower; or -50°C or lower. As yet another example, when the cured functional mixture is intended for use as a laminating adhesive, the functional mixture will usually be chosen so that the cured functional mixture will have a Tg of - 30°C or higher; or -15°C or higher; or -5°C or higher; or 15°C or higher; or 30°C or higher.

One method of evaluating functional mixtures of the present invention is the T-peel test. The T-peel test may be used to evaluate a functional mixture, whether the actual intended use of the functional mixture is as an adhesive or not. In the T-peel test, a layer of functional mixture of coat weight approximately 1.5 g/m² (0.9 lb/ream) is applied to the corona treated surface of corona-treated polyethylene terephthalate film of thickness approximately 0.025 mm (1 mil). Any solvents or other volatile compounds present in the functional mixture are substantially removed before, during, or after application of the layer. Then, aluminum foil (thickness approximately 0.025 mm (1 mil) is contacted with the layer of functional mixture, and the laminate so formed is pressed between nip rollers. The functional mixture is cured or allowed to cure. A strip of laminate of width 25 mm (1 inch) is cut, and the strip is peeled apart in a tensile tester at speed of 4.2 mm/sec (10 in/min). The T-peel result is recorded as the maximum load (in grams of load) required to pull the strip apart.

In some embodiments of the present invention, the functional mixture is used to make an elastomer. An elastomer, as used herein and as defined by Billmeyer, is a material that is capable of at least 100% elongation without breaking; that has relatively high tensile strength when fully stretched; and that retracts after stretching to its original dimensions. Normally, elastomers are amorphous (*i.e.*, non-crystalline) polymers; with glass transition (Tg) below temperatures of intended use; with a network of crosslinks; and with molecular weight between crosslinks that is relatively high (*i.e.,* at least as high as the entanglement molecular weight).

In one embodiment, the functional mixture is chosen so that the cured functional mixture will be an elastomer. It is contemplated that any one of a wide variety of combinations of ingredients (i.e., multifunctional Michael donor(s), multifunctional Michael acceptor(s), strong base catalyst(s), and optional other ingredients) could be chosen to achieve the result of a cured functional mixture that is an elastomer. Among such combinations of ingredients are those combinations in which at least one skeleton is a polymer with Tg below 20°C; i.e., either at least one multifunctional Michael donor or at least one multifunctional Michael acceptor or at least one of each has a skeleton that is a polymer with Tg below 20 °C.

The ingredients (including the skeleton of the donor, the composition of the acceptor, and the composition of the strong base catalyst) and the reactive equivalent ratio are chosen to yield a cured functional mixture that has the properties of a useful elastomer.

In some embodiments in which the cured functional mixture is an elastomer, the functional mixture, prior to cure, is formed in or is transferred into a mold or other suitable container. After the cure reaction is substantially complete, the resulting composition is a useful elastomer.

In embodiments in which the cured functional mixture is an elastomer, the products of the cure reaction preferably comprise a polymer with a Tg of 0°C or lower; more preferably -10 °C or lower; even more preferably -20°C or lower; still more preferably -30 °C or lower; yet more preferably -40°C or lower. In some multi-Tg elastomer embodiments, the peak in the curve of tan delta versus temperature will preferably have the peak at highest temperature occur at 0 °C or lower; more preferably - 10 °C or lower; even more preferably -20°C or lower; still more preferably -30 °C or lower; yet more preferably -40 °C or lower. In other multi-Tg elastomer embodiments, there may be one or more peaks in the curve of tan delta versus temperature above 0 °C; in such embodiments, the peak with the highest value of tan delta at the maximum point of the peak preferably occurs at temperature of -10°C or lower; even more preferably - 20°C or lower; still more preferably -30°C or lower; yet more preferably -40°C or lower.

In some embodiments of the present invention, the functional mixture is used to make a polymeric foam. A polymeric foam is a polymer the apparent density of which is decreased substantially by the presence of numerous cells dispersed throughout its mass. The foam may be flexible or rigid. The cells may be closed or open. The surface of the polymeric foam may or may not have a solid skin. The polymer portion of the foam may have any of a wide variety of compositions and glass transition temperatures. The polymer portion may be elastomeric or not; it may be crosslinked or thermoplastic.

In embodiments in which the cured functional mixture is a polymeric foam, the products of the cure reaction preferably comprise a polymer with a Tg of -20°C or lower; more preferably -30°C or lower; even more preferably -40°C or lower. In some multi-Tg polymeric foam embodiments, the peak in the curve of tan delta versus temperature will preferably have the peak at highest temperature occur at -20°C or lower; more preferably - 30°C or lower; even more preferably -40°C or lower. In other multi-Tg polymeric foam embodiments, there may be one or more peaks in the curve of tan delta versus temperature above -20°C; in such embodiments, the peak with the highest value of tan delta at the maximum point of the peak preferably occurs at temperature of -20°C or lower; even more preferably -30°C or lower; still more preferably -40°C or lower.

Polymeric foams may be made in a variety of ways. Some foams are made by lowering external pressure (extrusion, compression molding, and injection molding, for example); others by creating increased pressure within cells (expandable formulations); still others by dispersing gas in the polymer (froth methods); and still others by sintering polymer particles in a way that traps cells. In some expandable formulations, gas pressure within cells may be created by decomposition of a blowing agent, which is a chemical that releases gas when exposed to high temperatures. In other expandable formulations, gas pressure within cells may be created by release of gas from expandable microspheres, such as, for example, Expancel^{™} microspheres from Akzo Nobel Company, which release gas when heated.

In one embodiment of the present invention, a suitable functional mixture is made that includes suitable expandable microspheres. The functional mixture is made in or transferred into a suitable mold or other container. The functional mixture is then heated; the expandable microspheres release gas to form the cells, and the Michael addition reaction cures to form a polymer mass that has the cells dispersed within.

In the practice of the present invention, it is contemplated that the functional mixture of the present invention will dry and cure at ambient temperature (around 25°C). However, in some embodiments, the functional mixture may be heated to remove any volatile compounds, to speed the cure reaction, to reduce the viscosity of the functional mixture, for other reasons, or for any combination thereof.

It is to be understood that for purposes of the present specification and claims that the range and ratio limits recited herein can be combined. For example, if ranges of 60 to 120 and 80 to 110 are recited for a particular parameter, it is understood that the ranges of 60 to 110 and 80 to 120 are also contemplated. Additionally, if minimum range values of 1 and 2 are recited, and if maximum range values of 3, 4, and 5 are recited, then the following ranges are all contemplated: 1 to 3, 1 to 4, 1 to 5, 2 to 3, 2 to 4, and 2 to 5.

### EXAMPLES

In the examples below, only Example 10 and Example 39 (AF33) are of the invention.

In the examples below, the following materials and abbreviations are used:
SR-259 = polyethylene glycol (200) diacrylate, from Sartomer Co.
CD-501 = propoxylated (6) trimethylol propane triacrylate, from Sartomer Co.
SR-306HP = tripropylene glycol diacrylate, from Sartomer Co.
Morcure™ 2000 = diacrylate of diglycidyl ether bisphenol-A, from Rohm and Haas Co.
EB-8402 = urethane diacrylate, from UCB Co.
SR-9003 = propoxylated (2) neopentyl glycol diacrylate, from Sartomer Co.
SR-610 = polyethylene glycol (600) diacrylate, from Sartomer Co.
IRR-214 = cycloaliphatic diacrylate, from UCB Co.
CN-983 = aliphatic polyester urethane diacrylate, from Sartomer Co.
CN-965 = aliphatic polyester urethane diacrylate, from Sartomer Co.
CN-978 = 90/10 (percent by weight) blend: aromatic polyester urethane diacrylate / 2(2-ethoxyethoxy) ethyl acrylate
GF-19 = high slip low density polyethylene film, thickness 0.025mm (1 mil)
PET = corona treated polyethylene terephthalate, thickness 0.023 mm (92 gauge)
PP = polypropylene
PE = polyethylene
OPP = corona treated oriented polypropylene, thickness 0.025mm (1 mil)
Al Foil = Aluminum foil, thickness 0.025 mm (1 mil)
LLDPE = linear low density polyethylene film, thickness 0.05 mm (2 mil)
Metallized OPP = metallized oriented polypropylene, thickness 0.025mm (1 mil).

### Example 1: Preparation of Michael Donor Resin

A 2-liter, 4-neck, round-bottom flask was fitted with a mechanical stirrer, thermocouple, nitrogen inlet, steam-jacketed, Rashig ring packed Allyn condenser with take-off head and Fredrichs condenser and an addition funnel. The thermocouple was connected to a controller controlling a variable voltage transformer and heating mantle. Provision was also provided to apply vacuum to the system.

The flask was charged with 465.8 g (3.188 mol) of adipic acid, 257.4 g (1.550 mol) isophthalic acid, 495.0 g (5.494 mol) of 2-methyl-1,3-propandiol and 87.6 g (0.653 mol) of trimethylol propane and stirred and heated to 150°C under a slow flow of N₂. Water began to form and steam was applied to the column jacket to facilitate removal. As water was collected, the temperature was increased in steps to 225°C. After about 7 hr the water distillation had slowed and 160 ml had collected. The reaction was cooled to 175°C and 1.1 ml of Tyzor^{™} TBT catalyst (from DuPont Co.) was added. The pressure was reduced to 66.5 kPa (500 torr) and the temperature was maintained at 200 °C for an additional 5 hr until titration indicated an acid number less than 3.0.

The reaction temperature was adjusted to 100°C and an additional 1.1 ml Tyzor^{™} TBT catalyst was added and stirred about 30 minutes. Ethyl acetoacetate (476.0 g, 3.659) was added to the reaction mixture at about 8 ml/min under a slow flow of nitrogen and at 79.8 kPa (600 torr) pressure. When the addition was complete (60 min) the temperature was increased to 130°C and the pressure reduced to 66.5 kPa (500 torr) with steam on the column jacket to facilitate removal of the ethanol byproduct. The temperature was increased to 135°C and then 140°C over the next 2 hours and then held at that temperature for 7 hours. On the basis of ethanol recovered, the transesterification conversion was 77%.

### Example 2: Preparation of Other Michael Donor Resin

Using the methods of Example 1, a Michael donor resin was made, using ingredients in the following molar proportions:

| | |
|---|---|
| adipic acid: | 1.00 moles per mole of adipic acid |
| 2-methyl-1,3-propandiol: | 1.16 moles per mole of adipic acid |
| trimethylol propane: | 0.14 moles per mole of adipic acid |
| ethyl acetoacetate: | 0.74 moles per mole of adipic acid |

### Example 3: Preparation of Adhesive Formulations

Adhesive formulations are made by blending ingredients as follows. Percentages represent weight percent based on total weight of the adhesive formulation. To each formulation is added a catalyst solution, which is sodium ethoxide (21% by weight) in ethanol. The molar ratio of sodium ethoxide to acetoacetate groups in the donor is either 2.5:100 (2.5%), 5:100 (5%), or 10:100 (10%) in each adhesive formulation, as shown below:.

| Adhesive Formulation | Donor | Acceptor | | Catalyst Level |
|---|---|---|---|---|
| AF01 | 73% Example 1 | 27% | SR-259 | 5% |
| AF02 | 73% Example 1 | 27% | SR-259 | 10% |
| AF03 | 68% Example 1 | 32% | CD-501 | 10% |
| AF04 | 75% Example 1 | 25% | SR-306HP | 10% |
| AF05 | 70% Example 1 | 15% | SR-259 | 10% |
| | | 15% | Morcure™ 2000 | |
| AF06 | 71% Example 1 | 14.5% | SR-306HP | 10% |
| | | 14.5% | Morcure™ 2000 | |
| AF07 | 64% Example 1 | 17% | SR-306HP | 10% |
| | | 17% | EB-8402 | |
| AF08 | 64% Example 1 | 14.5% | SR-306HP | 2.5% |
| | | 14.5% | Morcure™ 2000 | |
| AF09 | 59% Example 1 | 20.5% | SR-306HP | 5% |
| | | 20.5% | Morcure™ 2000 | |
| AF10 | 58% Example 1 | 21% | SR-9003 | 5% |
| | | 21% | Morcure™ 2002 | |

A further series of adhesive formulations is made by blending ingredients as follows. In this series, the same catalyst level as above is used, and the catalyst level is 5% in each formulation.

| | | | |
|---|---|---|---|
| AF11 | 74% Example 2 | 13% | SR-306HP |
| | | 13% | Morcure™ 2000 |
| AF12 | 73% Example 2 | 11% | SR-306HP |
| | | 16% | Morcure™ 2000 |
| AF13 | 70% Example 2 | 21% | SR-306HP |
| | | 9% | Morcure™ 2000 |
| AF14 | 68% Example 2 | 22.5% | CD-501 |
| | | 9.5% | Morcure™ 2000 |
| AF15 | 68.5% Example 1 | 28% | SR-610 |
| AF16 | 77.6% Example 2 | 22.4% | IRR-214 |
| AF17 | 75.8% Example 1 | 24.2% | IRR-214 |
| AF18 | 74% Example 1 | 13% | SR-306HP |
| | | 6.5% | Morcure™ 2000 |
| | | 6.5% | IRR 214 |
| AF19 | 70.5% NR1M | 14.7% | CD-501 |
| | | 6.5% | Morcure 2000 |
| | | 6.5% | IRR-214 |

Another further series of adhesive formulations is made by blending ingredients as follows. In this series, the same catalyst level as above is used, and the catalyst level is 5% in each formulation.

| Adhesive Formulation | Donor | Acceptor | |
|---|---|---|---|
| AF20 | 76% Example 1 | 12% | SR-306HP |
| | | 12% | IRR-214 |
| AF21 | 75.7% Example 2 | 6% | Morcure™ 2000 |
| | | 18.2% | IRR-214 |
| AF22 | 76% Example 1 | 6% | SR-306HP |
| | | 18% | IRR-214 |
| AF23 | 73% Example 1 | 13.5% | CD-501 |
| | | 13.5% | IRR-214 |
| AF24 | 72% Example 1 | 14% | CD-501 |
| | | 3.5% | Morcure™ 2000 |
| | | 10.5% | IRR-214 |
| AF25 | 72% Example 2 | 14% | CD-501 |
| | | 7% | Morcure™ 2000 |
| | | 7% | IRR-214 |
| AF26 | 74.81 % Example 1 | 7.54% | SR-306HP |
| | | 4.43% | Morcure 2000 |
| | | 13.22% | IRR-214 |
| AF27 | 74.1% Example 1 | 11.65% | Morcure™ 2000 |
| | | 14.25% | IRR-214 |
| AF28 | 74.15% Example 1 | 6.45% | Morcure™ 2000 |
| | | 19.4% | IRR-214 |
| AF29 | 74.5% Example 1 | 6.4% | CD-501 |
| | | 19.1% | IRR-214 |

### Example 4: Preparation and Testing Of Laminates

Laminates are formed by coating adhesive formulations onto a first substrate at coat weights of 0.2 to 5.8 g/m² (0.12 to 3.56 lb/ream); drying the layer of adhesive formulation; contacting a second substrate to the coating; and pressing the laminate between rollers. The following pairs of first/second substrates are used to make laminates with the adhesive formulations given in Example 3: GF-19/PET, PET/Al foil, OPP/OPP, GF-19/Al foil, LLDPE/PET, and GF-19/metallized OPP.

Some laminates are stored at room temperature (approximately 20°C) for one, five, or seven days; other laminates (called "heat aged") are stored aged at 60°C for 72 hours. A strip 25 mm (1 inch) wide is cut from each laminate. The strip is pulled apart in a tensile tester at speed of 4.2 mm/sec (10 in/min). The peel strength is recorded as the maximum load required to pull the strip apart.

Peel strength of all formulations is usefully high at 1 day, 5 days, 7 days, and after heat aging.

### Example 5. An acetoacetate functional Michael donor on the basis of castor oil

A 1-liter, 4-neck, round-bottom flask is charged with 500 g (1.46 eq. OH) of Castor Oil (COLM grade, Hydroxyl Value = 164) and warmed to 100 °C under a slow flow of N₂. Tyzor^{TM} TBT catalyst (1.25 g) is added to the flask. With stirring, 199.5 g (1.53 mol) of ethyl acetoacetate is gradually added, under partial vacuum. The progress of the reaction can be monitored by the amount of ethanol recovered. When conversion reaches at least 80% of theory, the pressure is reduced to 13.3 kPa (100 torr) or less, and the remaining volatiles (ethanol, acetone, excess ethyl acetoacetate) removed. The product is a yellow oil and has 1.95 mmol / g acetoacetate functionality.

### Example 6. Michael Donor based on an acetoacetamide

A 2-liter, 4-neck, round-bottom flask is charged with 148 g (1 mol) Jeffamine^{™} EDR-148 (2 eq primary amine, from Huntsman Performance Chemicals Co.) and 400 ml toluene and heated to 100°C with stirring under N₂. 2,2,6-Trimethyl-4H-1,3-dioxin-4-one (298.9 g, 2 mol at 95%) is added over a period of 1 hour to the rapidly stirring solution and the temperature is allowed to increase to 110 °C as acetone is removed by distillation. When it is determined that the reaction is essentially complete, vacuum is cautiously applied to the flask to continue removal of most of the toluene. The product is isolated by processing on a wiped film evaporator operating at 110 °C with a pressure of 13.3 kPa (10 torr) or less to give a reddish oil. The concentration of the acetoacetamide is about 6.33 mmol/g.

### Example 7. . An cyanoacetamide functional Michael donor based on polyether diamine

A flask is charged with 297 g (3.0 mol) of methyl cyanoacetate and stirred under N₂ at room temperature (15 - 25°C). Jeffamine^{™} D230 (polyoxypropylenediamine, Mw - 225) (330 g , 3.0 mol maximum acetylatables) is charged to the addition funnel and added slowly to the kettle with efficient stirring. The rate of addition is controlled to keep the temperature of the batch below 65°C. After the addition is complete, the reaction is stirred and the temperature is maintained at 65°C until analysis (nmr, ir, and/or titration) indicates complete reaction. The reaction is cooled to 40°C and vacuum is cautiously applied to distill the methanol reaction byproduct, finishing up at full vacuum to remove all volatile byproduct and excess reactant. The product is a red oil with a theory cyanoacetamide concentration of 5.65 mmol/g.

### Example 8. An cyanoacetate functional Michael donor based on acrylic polymer

The procedure used to prepare the butyl acrylate / glycidyl methacrylate oligomer precursor was substantially the same as described in Example ID in US 6,433,098. The BA / GMA oligomer thus prepared was nominally degree of polymerization 6 with an average mole unit formula of 3.3 BA / 2.7 GMA (equivalent weight = 292; 2.7 epoxy-functional).

A 500 ml, 4-neck round bottom flask fitted with a thermocouple, mechanical stirrer and condenser was charged with 230 g (0.788 eq of epoxy) of the BA / GMA oligomer and 67.0 g (0.788 mol) of cyanoacetic acid. The thermocouple controlled an automatic jack used to raise a heating mantle and provide air cooling. The mixture was warmed to 65 °C. As the temperature reached about 60 °C in 24 min the mixture cleared and continued to exotherm to 90 °C in about 3 minutes. The reaction was cooled with a water bath and then held at 80 °C for 4 hr. The acid titer was 0.178 mmol/g. The reaction was heated and stirred further until an acid titer of 0.049 mmol/g was achieved (estimated conversion = 98%) The nmr indicated the reaction of most of the epoxy functionality. The theory concentration of cyanoacetate functionality is 2.65 mmol/g and there is 0.049 mmol/g of residual carboxylic acid functionality.

### Example 9. An acetoacetate functional Michael donor from hydroxy terminated polybutadiene

A 1-liter, 4-neck, round-bottom flask is charged with 500 g (0.9 eq. OH) of Poly bd R20LM Resin (Sartomer, Hydroxyl Value = 101) and warmed to 100 °C under a slow flow of N₂. Tyzor^{™} TBT catalyst (1.15 g) is added to the flask and the addition funnel is charged with 130 g (1.0 mol) of ethyl acetoacetate. While maintaining the slow flow of N₂ and partial vacuum, the ethyl acetoacetate is added to the stirred mixture. Then the temperature is increased to 130°C and pressure is lowered. When conversion reaches at least 80% of theory, the pressure is lowered to remove the remaining volatiles (ethanol, acetone, excess ethyl acetoacetate). The product will be a yellow oil with 1.28 mmol / g acetoacetate functionality.

### Examples 10-14. Adhesive formulations

An adhesive formulation can be demonstrated using the catalyzed Michael donors of Examples 5, 6, 7, 8, and 9 and the multifunctional acrylate polyethylene glycol (600) diacrylate (Sartomer SR-610). The mixture ratio is calculated to provide 1 mol of acetoacetate, acetoacetamide, cyanoacetate or cyanoacetamide moiety per mol of acrylate moiety. Catalyst solution as above (21% sodium ethoxide in ethanol) is used, at mole ratio of sodium ethoxide to Michael donor functional groups of 5%.

| Example | Michael Donor | Wt Michael Donor (g) | Wt Sartomer SR-610 (g) |
|---|---|---|---|
| 10 | Ex. 5 | 10 | 7.75 |
| 11 | Ex. 6 | 10 | 25.17 |
| 12 | Ex. 7 | 10 | 22.46 |
| 13 | Ex. 8 | 10 | 10.53 |
| 14 | Ex. 9 | 10 | 8.55 |

The Michael donor component is mixed with the Sartomer SR-610 and with the catalyst solution immediately before application and applied as a thin film to a 2.0 mil sheet of polyester and dried and laminated to another sheet of polyester. The adhesion is tested after 1 day and 7 days at room temperature by pulling the sheets apart using a tensile tester Each example performs as a laminating adhesive.

### Example 15: Polymeric Foam

To make a polymeric foam, the following formula is used:
Donor: Example 1,71 grams
Acceptors: SR-306HP, 14.5 grams; and Morcure^{™} 2000, 14.5 grams
Catalyst: 21% solution of sodium ethoxide in ethanol, in amount sufficient to give mole ratio of sodium ethoxide to acetoacetate groups of 10:100.
3.63 grams Expancel^{™} 820 DU 40 (Akzo Nobel Co.) expandable microspheres The formula is heated at 120°C for 15 Minutes. The result is a useful polymeric foam.

### Example 16: Elastomer

To make an elastomer, the following formula is used:
Donor: Example 1, 71 grams
Acceptors: SR-306HP, 14.5 grams; and Morcure™ 2000, 14.5 grams
Catalyst: 21% solution of sodium ethoxide in ethanol, in amount sufficient to give mole ratio of sodium ethoxide to acetoacetate groups of 10:100.

The formula is heated at 120°C for 15 Minutes. The result is a useful elastomer.

### Examples 17-20: Synthesis of Acetoacetate Functional Polyesters

Glycol(s), carboxylic acid(s), and Fascat^{™} 4100, were charged to a 1-Liter one-piece reactor and slowly heated to 100°C. The reaction temperature was slowly increased to 200°C. When water evolution stopped, the temperature was decreased to 175°C and vacuum applied. The reaction was maintained at 175°C and pressure of ca. 0.4 kPa (3 torr) until the Acid Value (AV) was less than 1.0. The reaction temperature was decreased to 120°C, and then ethyl acetoacetate was added gradually over a 1 hr. interval. The reaction temperature was increased to 150°C, and maintained until ethanol evolution ceased. While maintaining the reaction at 150°C, vacuum was applied and residual ethanol and ethyl acetoacetate were removed. Raw materials used were as follows:

| **No.** | **Ingredient** | **grams** |
|---|---|---|
| 17 | diethylene glycol | 287.04 |
| | trimethylol propane | 43.55 |
| | adipic acid | 257.47 |
| | isophthalic acid | 144.78 |
| | Fascat™ 4100 | 0.66 |
| | ethyl acetoacetate | 148.05 |
| 18 | trimethylol propane | 43.56 |
| | neopentyl glycol | 279.92 |
| | adipic acid | 384.45 |
| | Fascat™ 4100 | 0.7 |
| | ethyl acetoacetate | 138.00 |
| | | |
| 19 | trimethylol propane | 162.15 |
| | neopentyl glycol | 140.93 |
| | 1,6-hexane diol | 43.60 |
| | adipic acid | 371.61 |
| | Fascat™ 4100 | 0.81 |
| | ethyl acetoacetate | 167.35 |
| 20 | trimethylol propane | 43.70 |
| | methyl propane diol | 246.55 |
| | adipic acid | 231.95 |
| | isophthalic acid | 126.93 |
| | Fascat™ 4100 | 0.86 |
| | ethyl acetoacetate | 223.23 |

### Examples 21-23: Synthesis of Acetoacetate Terminated Polyesteramide

Glycol(s), carboxylic acid(s), amino alcohol, and Fascat 4100, were charged to a 1-Liter one-piece reactor and slowly heated to 100°C. The reaction temperature was slowly increased to 200°C. When water evolution stopped, the temperature was decreased to 175°C and vacuum applied. The reaction was maintained at 175°C and pressure of ca. 0.4 kPa (3 torr) until the Acid Value (AV) was less than 1.0. The reaction temperature was decreased to 120°C, and then ethyl acetoacetate was added gradually over a 1 hr. interval. The reaction temperature was increased to 150°C, and maintained until ethanol evolution ceased. While maintaining the reaction at 150°C, vacuum was applied and residual ethanol and ethyl acetoacetate were removed. Raw materials were as follows:

| **No.** | **Ingredient** | **grams** |
|---|---|---|
| 21 | diethylene glycol | 232.08 |
| | trimethylol propane | 43.60 |
| | ethanolamine | 30.68 |
| | adipic acid | 258.10 |
| | isophthalic acid | 144.92 |
| | Fascat™ 4100 | 0.75 |
| | ethyl acetoacetate | 148.38 |
| 22 | trimethylol propane | 43.60 |
| | neopentyl glycol | 238.16 |
| | ethanolamine | 31.03 |
| | adipic acid | 385.05 |
| | Fascat™ 4100 | 0.81 |
| | ethyl acetoacetate | 162.70 |
| 23 | trimethylol propane | 43.81 |
| | methyl propane diol | 203.74 |
| | ethanolamine | 36.20 |
| | adipic acid | 234.34 |
| | isophthalic acid | 128.20 |
| | Fascat™ 4100 | 0.98 |
| | ethyl acetoacetate | 220.52 |

### Examples 24-35: Curable Mixtures

Curable mixtures were made using a multi-functional Michael donor, a multi-functional Michael acceptor, ethanol, and a catalyst. In each case, the catalyst was sodium ethoxide, added to the mixture as a solution (21% by weight in ethanol). The mixtures were as follows:

| No | donor example no. | donor grams | acceptor type | acceptor grams | ethanol grams | grams of catalyst solution |
|---|---|---|---|---|---|---|
| 24 | 17 | 5.05 | SR-259 | 1.28 | 3.75 | 0.21 |
| 25 | 17 | 5.23 | SR-259 | 1.33 | 5.12 | 0.18 |
| | | | Morcure 2000 | 0.70 | | |
| 26 | 17 | 5.11 | SR-259 | 1.44 | 6.48 | 0.16 |
| | | | CN-983 | 0.79 | | |
| 27 | 17 | 5.18 | SR-259 | 1.44 | 6.45 | 0.18 |
| | | | CN-965 | 0.87 | | |
| 28 | 17 | 5.16 | SR-259 | 1.45 | 5.89 | 0.16 |
| | | | CN-978 | 0.82 | | |
| 29 | 18 | 5.09 | SR-259 | 1.65 | 7.25 | 0.18 |
| 30 | 19 | 5.06 | SR-259 | 1.83 | 8.00 | 0.17 |
| 31 | 20 | 7.63 | SR-259 | 4.01 | 11.74 | 0.19 |
| 32 | 21 | 5.08 | SR-259 | 1.75 | 6.79 | 0.19 |
| 33 | 21 | 5.21 | SR-529 | 1.45 | 7.49 | 0.19 |
| | | | Morcure 2000 | 0.75 | | |
| 34 | 22 | 5.13 | SR-259 | 2.11 | 10.14 | 0.19 |
| 35 | 23 | 7.57 | SR-259 | 4.51 | 12.60 | 0.32 |

### Example 36: Test Results on Curable Mixtures

Each of Examples 24-31 was coated onto a first film with a number 3 rod and laminated to a second film with by passing through nip rollers at 150°C. The peel strength was determined, as above, after 1 day and after 7 days. The results were as follows:

| Curable Mixture No. | first film | second film | coat weight, g/m² (lb/ream) | 1 day peel, grams | 7 day peel grams |
|---|---|---|---|---|---|
| 24 | PP | PP | 5.5 (3.4) | 40 | 50 |
| 24 | polyester | nylon | 5.1 (3.1) | 60 | 75 |
| 24 | polyester | high-slip PE | 5.5 (3.4) | 70 | 90 |
| 25 | PP | PP | 4.2 (2.6) | 30 | 40 |
| 26 | PP | PP | 2.6 (1.6) | 40±10 | 25±5 |
| 27 | PP | PP | 2.6(1.6) | 50 | 40±5 |
| 28 | PP | PP | 3.9 (2.4) | 55±5 | 60±10 |
| 29 | PP | PP | 1.0 (0.6) | 35 | 35 |
| 30 | PP | PP | 1.8 (1.1) | 20 | 20 |
| 31 | PP | PP | 2.4 (1.5) | 50 | 65 |
| 32 | PP | PP | 3.6 (2.2) | 25 | 50 |
| 32 | polyester | nylon | 3.6 (2.2) | 35 | 45 |
| 32 | polyester | high-slip PE | 2.8 (1.7) | 40 | 110 |
| 33 | PP | PP | 4.9 (3.0) | 60 | 125 |
| 34 | PP | PP | 2.3 (1.4) | 25 | 50 |
| 35 | PP | PP | 2.1 (1.3) | 75 | 75 |

### Example 37: Preparation of Further Michael Donors

The following Michael donors were made. Donors MD1 and MD2 were made using the methods described in Example 1 herein above. Donor MD3 was made using the methods described by Witzeman et. al. in US Patent 5,051,529.

| **Michael Donor #** | **Ingredient** | **Moles^{note a}** |
|---|---|---|
| | isophthalic acid | 0.49 |
| MD1 | adipic acid | 1.00 |
| | 2-methyl-1,3 propanediol | 1.72 |
| | trimethylol propane | 0.20 |
| | ethyl acetoacetate | 1.09 |
| | adipic acid | 1.00 |
| MD2 | 2-methyl-1,3 propanediol | 1.16 |
| | trimethylol propane | 0.14 |
| | ethyl acetoacetate | 0.74 |
| MD3 | neopentyglycol bis(acetoacetate) | as supplied |

| | | |
|---|---|---|
| note ^{a}: moles of ingredient compound used per mole of adipic acid compound. | | |

### Example 38: Preparation of Further Adhesive Formulations

The following functional mixtures, useful as adhesive formulations, were prepared by blending the ingredients listed below. Percentages represent weight percent based on the total weight of the functional mixture.

| Functional Mixture # | Donor | | Acceptor | | Catalyst |
|---|---|---|---|---|---|
| AF30 | 75.7% | MD2 | 6% | Morcure™ 2000 | note b |
| | | | 18.3% | IRR-214 | |
| AF31 | 76% | MD1 | 6% | SR306HP | note b |
| | | | 18% | IRR-214 | |
| AF32 | 72% | MD2 | 14% | CD501 | note b |
| | | | 7% | Morcure™ 2000 | |
| | | | 7% | IRR-214 | |
| AF33 | 27% | MD3 | 73% | Morcure™ 2000 | note c |

| | | | | | |
|---|---|---|---|---|---|
| note b: the donor was mixed with solution of sodium ethoxide (21% in ethanol), using 5 moles of sodium ethoxide per 100 moles of acetoacetate groups in the donor; solvent was removed by evaporation; the mixture was then combined with the acceptor. note c: the donor, the acceptor, and a solution of sodium ethoxide (21 % in ethanol), using 5 moles of sodium ethoxide per 100 moles of acetoacetate groups in the donor, were mixed together and used as the functional mixture. | | | | | |

### Example 39: Testing of Functional Mixtures AF30-AF33:

The Tg's of the reaction products of AF30-AF33 were measured using DMA as described herein above. Also, each functional mixture was coated onto polyester film at coat weight between 1.6 g/m² (1 lb/ream) and 3.3 g/m² (2 lb/ream); any volatile components were removed by evaporation or were allowed to evaporate; a film of high-slip low density polyethylene (HSLDPE) was applied to the functional mixture; the resulting laminate was pressed between nip rolls; the functional mixture was cured; a sample of the laminate cut to width of 25 mm (1 inch) was placed in a tensile tester and peeled apart at crosshead speed of 4.2 mm/sec (10 inch/min); and the maximum force is reported below as "Adhesion" in grams of load.

| Functional Mixture # | T_{g} (°C) | Adhesion (grams) |
|---|---|---|
| AF30 | -24 | 200 |
| AF31 | -10 | 289 |
| AF32 | -3 | 372 |
| AF33 | 33 | 641^{d} |

| | | |
|---|---|---|
| note ^{d}: HISDPE film failed | | |

All four functional mixtures perform usefully as laminating adhesives, and the performance improves as the Tg increases.

## Claims

1. A method for bonding two substrates comprising the steps of
(a) applying to a first substrate a layer of a functional mixture comprising
(i) at least one multi-functional Michael donor that has a skeleton selected from the group consisting of cyclohexane dimethanol, hexane diol, castor oil, trimethylol propane, glycerol, ethylene glycol, propylene glycol, pentaerythritol, neopentyl glycol, diethylene glycol, dipropylene glycol, butanediol, 2-methyl-1,3-propanediol, trimethylolethane, 4,8-Bis(hydroxymethyl)tricyclo[5.2.1.0^{2,6}]decane, Polysorbate 80, glucose, and dipentaerythritol,
(ii) at least one multi-functional Michael acceptor, wherein said multi-functional Michael acceptor has two or more functional groups having the structure R¹R²C=CR³-C(O)-, wherein R¹, R², and R³ are, independently, hydrogen or organic radicals, and
(iii) at least one compound that will catalyze a Michael addition reaction;
(b) contacting a further substrate to said layer of said mixture,
wherein said two substrates form a pair selected from the group of pairs consisting of polypropylene/polypropylene, polyester/nylon, polyester/polyethylene, polypropylene/metallized polypropylene, polypropylene/aluminum foil, polyester/aluminum foil, and polyamide/aluminum foil.

2. The method of claim 1 wherein at least one of (i) or (ii) has functionality of 3 or greater.

3. The method of claim 1 wherein the ratio of the number of all the functional groups R¹R²C=CR³-C(O)- in said functional mixture to the number of Michael active hydrogen atoms in said functional mixture is 0.1:1 to 3:1.

4. The method of claim 1 wherein (i) comprises at least one multi-functional Michael donor that has at least 2 acetoacetyl groups per molecule.

5. The method of claim 1 wherein (ii) comprises at least one multi-functional acrylate with molecular weight between 100 and 1,000.

6. The method of claim 1, wherein the product of reacting or allowing to react said at least one multi-functional Michael donor and said at least one Michael acceptor is a pressure sensitive adhesive that has a glass transition temperature of 15°C or lower.

7. A bonded article comprising at least two substrates bonded according the method of claim 1.

8. The method of claim 1 wherein said compound that will catalyze a Michael addition reaction is a piperidine or amidine compound.

## Patentansprüche

1. Ein Verfahren zum Bonden zweier Substrate, das die folgenden Schritte beinhaltet:
(a) Auftragen einer Schicht aus einer funktionellen Mischung auf ein erstes Substrat, die Folgendes beinhaltet:
(i) mindestens einen mehrfunktionellen Michael-Donator, der ein Skelett aufweist, das ausgewählt ist aus der Gruppe, bestehend aus Cyclohexandimethanol, Hexandiol, Rizinusöl, Trimethylolpropan, Glycerin, Ethylenglycol, Propylenglycol, Pentaerythrit, Neopentylglycol, Diethylenglycol, Dipropylenglycol, Butandiol, 2-Methyl-1,3-propandiol, Trimethylolethan, 4,8-Bis(hydroxymethyl)tricyclo[5.2.1.0^{2,6}]decan, Polysorbat 80, Glucose und Dipentaerythrit,
(ii) mindestens einen mehrfunktionellen Michael-Akzeptor, wobei der mehrfunktionelle Michael-Akzeptor zwei oder mehr funktionelle Gruppen mit der Struktur R¹R²C=CR³-C(O)- aufweist, wobei R¹, R² und R³ unabhängig voneinander Wasserstoff oder organische Radikale sind, und
(iii) mindestens eine Verbindung, die eine Michael-Additionsreaktion katalysieren wird;
(b) In-Kontakt-Bringen eines weiteren Substrats mit der Schicht aus der Mischung, wobei die zwei Substrate ein Paar bilden, das ausgewählt ist aus der Gruppe von Paaren, bestehend aus Polypropylen/Polypropylen, Polyester/Nylon, Polyester/Polyethylen, Polypropylen/metallisiertem Polypropylen, Polypropylen/Aluminiumfolie, Polyester/Aluminiumfolie und Polyamid/Aluminiumfolie.

2. Verfahren gemäß Anspruch 1, wobei mindestens eines von (i) oder (ii) eine Funktionalität von 3 oder mehr aufweist.

3. Verfahren gemäß Anspruch 1, wobei das Verhältnis der Anzahl aller funktioneller Gruppen R¹R²C=C R³-C(O)- in der funktionellen Mischung zu der Anzahl von Michael-aktiven Wasserstoffatomen in der funktionellen Mischung bei 0, 1: 1 bis 3:1 liegt.

4. Verfahren gemäß Anspruch 1, wobei (i) mindestens einen mehrfunktionellen Michael-Donator beinhaltet, der mindestens 2 Acetoacetylgruppen pro Molekül aufweist.

5. Verfahren gemäß Anspruch 1, wobei (ii) mindestens ein mehrfunktionelles Acrylat mit einem Molekulargewicht zwischen 100 und 1000 beinhaltet.

6. Verfahren gemäß Anspruch 1, wobei das Produkt der Reaktion oder des Ermöglichens der Reaktion des mindestens einen mehrfunktionellen Michael-Donators mit dem mindestens einen Michael-Akzeptor ein druckempfindlicher Klebstoff ist, der eine Glasübergangstemperatur von 15 °C oder weniger aufweist.

7. Ein gebondeter Artikel, der mindestens zwei Substrate, die gemäß dem Verfahren aus Anspruch 1 gebondet sind, beinhaltet.

8. Verfahren gemäß Anspruch 1, wobei die Verbindung, die eine Michael-Additionsreaktion katalysieren wird, eine Piperidin- oder Amidinverbindung ist.

## Revendications

1. Une méthode pour lier deux substrats comprenant les étapes consistant à
(a) appliquer sur un premier substrat une couche d'un mélange fonctionnel comprenant
(i) au moins un donneur de Michael multifonctionnel qui a un squelette sélectionné dans le groupe consistant en un cyclohexane diméthanol, un hexane diol, une huile de ricin, un triméthylol propane, un glycérol, un éthylèneglycol, un propylèneglycol, un pentaérythritol, un néopentylglycol, un diéthylèneglycol, un dipropylèneglycol, un butanediol, un 2-méthyl-1,3-propanediol, un triméthyloléthane, un 4,8-Bis(hydroxyméthyl)tricyclo[5.2.1.0^{2,6}]décane, un polysorbate 80, un glucose, et un dipentaérythritol,
(ii) au moins un accepteur de Michael multifonctionnel, ledit accepteur de Michael multifonctionnel ayant deux groupes fonctionnels ou plus ayant la structure R¹R²C=CR³-C(O)-, dans laquelle R¹, R², et R³ sont, indépendamment, l'hydrogène ou des radicaux organiques, et
(iii) au moins un composé qui catalysera une réaction d'addition de Michael ;
(b) mettre en contact un substrat supplémentaire sur ladite couche dudit mélange, dans laquelle lesdits deux substrats forment une paire sélectionnée dans le groupe de paires consistant en polypropylène/polypropylène, polyester/nylon, polyester/polyéthylène, polypropylène/polypropylène métallisé, polypropylène/feuille d'aluminium, polyester/feuille d'aluminium, et polyamide/feuille d'aluminium.

2. La méthode de la revendication 1 dans laquelle au moins soit (i), soit (ii) a une fonctionnalité de 3 ou plus.

3. La méthode de la revendication 1 dans laquelle le rapport du nombre de tous les groupes fonctionnels R¹R²C=CR³-C(O)- dans ledit mélange fonctionnel au nombre d'atomes d'hydrogène actif de Michael dans ledit mélange fonctionnel est de 0,1/1 à 3/1.

4. La méthode de la revendication 1 dans laquelle (i) comprend au moins un donneur de Michael multifonctionnel qui a au moins 2 groupes acétoacétyl par molécule.

5. La méthode de la revendication 1 dans laquelle (ii) comprend au moins un acrylate multifonctionnel avec une masse moléculaire comprise entre 100 et 1 000.

6. La méthode de la revendication 1 dans laquelle le produit de faire réagir ou de laisser faire réagir ledit au moins un donneur de Michael multifonctionnel et ledit au moins un accepteur de Michael est un adhésif sensible à la pression qui a une température de transition vitreuse de 15 °C ou moins.

7. Un article lié comprenant au moins deux substrats liés selon la méthode de la revendication 1.

8. La méthode de la revendication 1 dans laquelle ledit composé qui catalysera une réaction d'addition de Michael est une pipéridine ou un composé amidine.
